# EUROPÄISCHE PATENTSCHRIFT

(11) **EP 2 091 137 B1**
(45) Veröffentlichungstag und Bekanntmachung des Hinweises auf die Patenterteilung: **25.06.2014**
(21) Anmeldenummer: 08002960.6
(22) Anmeldetag: 18.02.2008
(51) Int. Cl.: H02K 41/03, H02K 21/04, H02K 21/44

(54) **Primärteil und lineare elektrische Maschine mit Kraftwelligkeitsausgleich**
Primary part and linear electrical machine with compensation of force ripples
Partie primaire et machine électrique linéaire dotée d'une compensation d'ondulation de force

(43) Veröffentlichungstag der Anmeldung: 19.08.2009
(73) Patentinhaber: Siemens Aktiengesellschaft, 80333 München (DE)
(72) Erfinder: Jajtic, Zeljko, 80992 München (DE)

(56) Entgegenhaltungen:
- WO-A-2006/032255
- WO-A-2008/015140
- DE-A1-102005 004 380
- DE-A1-102006 013 582
- DE-A1-102006 035 671
- DE-C1- 19 829 052
- JP-A- 2005 168 243

## Beschreibung

Die Erfindung betrifft ein Primärteil einer linearen elektrischen Maschine, wobei das Primärteil ein erstes Mittel zur Erzeugung eines ersten magnetischen Feldes und ein zweites Mittel zur Erzeugung eines zweiten magnetischen Feldes aufweist, wobei erstes Mittel und zweites Mittel derart angeordnet sind, dass eine Überlagerung des ersten magnetischen Feldes mit dem zweiten magnetischen Feld ermöglicht ist. Weiterhin betrifft die Erfindung eine lineare elektrische Maschine mit einem derartigen Primärteil.

Lineare elektrische Maschinen weisen ein Primärteil und ein Sekundärteil auf, wobei Primärteil und Sekundärteil sich gegenüber stehen und durch einen Luftspalt voneinander beabstandet sind. Das Primärteil ist zur Bestromung mit elektrischem Strom vorgesehen.

Es besteht die Möglichkeit, dass sowohl das Primärteil als auch das Sekundärteil aktive Mittel zur Erzeugung magnetischer Felder aufweisen. In einem solchen Fall weist beispielsweise das Primärteil eine bestrombare Wicklung und das Sekundärteil Permanentmagnete auf.

Daneben besteht ferner die Möglichkeit, dass das Primärteil mehrere aktive Mittel zur Erzeugung magnetischer Felder aufweist und das Sekundärteil frei von derartigen Mitteln ist.

Aus der DE 10 2004 045 992 A1 ist eine elektrische Maschine bekannt, wobei das Primärteil alle magnetischen Quellen der elektrischen Maschine aufweist. Das Primärteil weist beispielsweise eine bestrombare Wicklung und Permanentmagnete auf, wohingegen das Sekundärteil lediglich beispielsweise als gezahnte Eisenreaktionsschiene ausgebildet ist.

Im Unterschied zu rotatorisch arbeitenden elektrischen Maschinen besitzen lineare elektrische Maschinen naturgemäß Endbereiche, in welchem der elektromagnetische Teil der Maschine endet. Wird beispielsweise ein Linearmotor in Kurzstatorbauweise, d. h. das Primärteil ist als kürzeres Bauteil gegenüber einem längeren Sekundärteil ausgebildet, ausgeführt, ergeben sich für das Primärteil zwei Endbereiche, die im Einflussbereich des Sekundärteils liegen. Die Enden des Primärteils wechselwirken mit dem Sekundärteil derart, dass dies einen maßgeblichen Einfluss auf die aktive Kraftwelligkeit und die passive Kraftwelligkeit, auch Rastkraft genannt, hat.

Als passive Kraftwelligkeit werden parasitäre Rastkräfte bezeichnet, welche aufgrund der magnetischen Wechselwirkung zwischen Primärteil und Sekundärteil auftreten. Die Folge sind Vibrationen, unruhiger Lauf sowie Schleppfehler bei Bearbeitungsprozessen.

Des Weiteren sind die induzierten Spannungen, d.h. die elektromotorischen Kräfte (EMK), in der Anfangs- und Endspule an den Stirnseiten des Primärteils aufgrund eines fehlenden magnetischen Rückschlusses in der Regel geringer ausgeprägt als in den mittleren Spulen. Dies hat zur Folge, dass die elektrische Maschine keine symmetrisch induzierte Spannung aufweist und sich neben Krafteinbußen eine zusätzliche stromabhängige Kraftwelligkeit, als aktive Kraftwelligkeit bezeichnet, ergibt.

Aus der DE 10 2005 004380 A1 ist ein Linearmotor mit Kraftwelligkeitsausgleich bekannt. Um einen Kraftwelligkeitsausgleich bei dem Linearmotor zu erzielen, wird dieser mit einem Kraftwelligkeitsausgleichs-Zahn mit einer vorgebbaren Breite versehen, der durch einen zusätzliche Luftspalt vom normalen Luftspalt beabstandet ist und zu den benachbarten Zähnen des Blechpaketes einen anderen Abstand aufweist, als es bei den übrigen Zähnen des Blechpaketes unter sich der Fall ist.

Die Aufgabe der vorliegenden Erfindung ist es, ein Primärteil, welches mehrere aktive Mittel zur Erzeugung magnetischer Felder aufweist, sowie eine lineare elektrische Maschine mit einem derartigen Primärteil weiterzubilden, dass diese eine reduzierte aktive und passive Kraftwelligkeit, d.h. Rastkraft, aufweisen.

Die Aufgabe wird mit den Merkmalen der Patentansprüche 1 und 7 gelöst. Vorteilhafte Weiterbildungen sind den Unteransprüchen zu entnehmen.

Das Primärteil weist ein erstes Mittel zur Erzeugung eines ersten magnetischen Feldes und ein zweites Mittel zur Erzeugung eines zweiten magnetischen Feldes auf, wobei erstes Mittel und zweites Mittel derart angeordnet sind, dass eine Überlagerung des ersten magnetischen Feldes mit dem zweiten magnetischen Feld ermöglicht ist.

Erfindungsgemäß weist das Primärteil an einer oder beiden seiner Stirnseiten ein flussführendes Element zur Reduktion der Kraftwelligkeit auf. Vorteilhafterweise ist an jeder der beiden Stirnseiten des Primärteils ein flussführendes Element angeordnet.

Das flussführende Element zur Reduktion der Kraftwelligkeit an den Stirnseiten des Primärteils ist als Endzahnmodul ausgebildet und weist zumindest einen Permanentmagneten auf. Das Endzahnmodul entspricht in seiner Bauart dabei den übrigen Zahnmodulen des Primärteils. Es unterscheidet sich lediglich dadurch, dass es nicht wicklungstragend ist, d.h. es weist keine Zahnspule auf.

Durch die Anbringung flussführender Elemente ist eine Reduktion der aktiven und besonders der passiven Kraftwelligkeit, d. h. der Rastkraft, möglich. Die induzierten Spannungen in den wicklungstragenden Endzähnen des Primärteils werden angehoben, wobei hierbei Ziel eine möglichst gleichförmige EMK der Wicklung des Primärteils ist.

Das Primärteil ist mittels einer vorgebbaren Anzahl an Zahnmodulen ausbildbar, wobei jedes Zahnmodul zumindest einen Permanentmagneten und eine Zahnspule aufweist. Mittels einzelner Zahnmodule ist ein Primärteil je nach gewünschter Bauart und Länge modular aufbaubar. Die gewünschte Anzahl an Zahnmodulen wird entsprechend zusammengefügt, beispielsweise mittels Klammern. Jedes Zahnmodul ist insbesondere mittels Elektroblechen als Blechpaket zur Reduktion von Wirbelströmen im Primärteil ausgebildet.

Vorteilhafterweise ist das erste Mittel zur Erzeugung eines ersten magnetischen Feldes als ein- oder mehrphasige Wicklung ausgebildet. Insbesondere weist das Primärteil eine dreiphasige Wicklung in Form von Zahnspulen zum Anschluss an ein Drehstromnetz auf. Das zweite Mittel zur Erzeugung eines zweiten magnetischen Feldes ist als Permanentmagnetmaterial, insbesondere als ein- oder mehrteilige Permanentmagnete, ausgebildet.

Die Erfindung löst die Aufgabe durch zwei zusätzliche Zahnmodule an beiden Enden des Primärteils, die Endzahnmodule. Diese Endzahnmodule weisen die gleiche Grundgeometrie wie die wicklungs- bzw. spulentragenden Zahnmodule des Primärteils auf und sie werden als Fortsetzung des aktiven Primärteilbereichs an beiden Enden angeordnet.

Entscheidend für den Ausgleich insbesondere der Rastkräfte ist die Geometrie und/oder Magnetisierung des Permanentmagnetmaterials bzw. des Permanentmagnets im Endzahnmodul.

In einer ersten Variante für den Ausgleich der Kraftwelligkeit weisen die Permanentmagnete des Primärteils eine vorgebbare Magnetisierung bzw. eine Magnetfeldstärke auf, wobei die Permanentmagnete der Zahnmodule und die Permanentmagnete der Endzahnmodule die gleiche Magnetisierung aufweisen. Jedoch weist das Endzahnmodul im Vergleich zu einem Zahnmodul einen Permanentmagneten mit geringerem Volumen auf. Das bedeutet, dass der Permanentmagnet im Endzahnmodul kleiner ausgebildet ist bzw. es ist weniger Permanentmagnetmaterial im Endzahnmodul angeordnet. Beispielsweise ist der Permanentmagnet im Endzahnmodul um den Faktor 2 bis 4 gegenüber einem Permanentmagneten im Zahnmodul verkleinert, wodurch eine optimale Reduktion der Rastkraft erzielbar ist. Das Maß der Verringerung des Permanentmagneten im Endzahnmodul ist u.a. von einer Spurbreite eines Linearmotors abhängig.

In einer zweiten Variante für den Ausgleich der Kraftwelligkeit weisen die Permanentmagnete des Primärteils eine vorgebbare Magnetisierung auf, wobei die Permanentmagnete der Zahnmodule eine höhere Magnetisierung gegenüber den Permanentmagneten in den Endzahnmodulen aufweisen. Das bedeutet, dass die Permanentmagnete in den Zahn- und Endzahnmodulen die gleiche geometrische Größe bzw. das gleiche Volumen aufweisen, sich jedoch in der Magnetisierung unterscheiden, d. h. es ist unterschiedliches Magnetmaterial in den Endzahnmodulen gegenüber den Zahnmodulen eingebracht. Bekanntes eingesetztes Magnetmaterialen sind beispielsweise Neodym-Eisen-Bor- Magnete, Samarium-Kobalt-Magnete oder Ferritmagnete. Diese verschiedenen Magnetmaterialen weisen unterschiedliche Magnetisierungen auf, die beispielsweise durch die magnetischen Kennwerte wie Remanenzinduktion oder Koerzitivfeldstärke gekennzeichnet sind. Beispielsweise ergibt eine auf ca. 25% reduzierte Remanenzinduktion eine um den Faktor 4-5 reduzierte Rastkraft der elektrischen Maschine im Vergleich zur Rastkraft einer Maschine ohne modifizierte Endzahnmodule.

Die Erfindung bezieht sich insbesondere auf mehrphasige Linearmotoren mit Permanentmagneterregung im Primärteil und einem passiven Sekundärteil, beispielsweise in Form einer gezahnten Eisenstruktur. Wie bei allen Linearmotoren bzw. linearen elektrischen Maschinen entsteht durch elektromagnetische Diskontinuitäten an beiden Primärteilenden eine Rastkraft, die den Motorbetrieb stört.

Die erfindungsgemäße lineare elektrische Maschine weist ein erfindungsgemäßes Primärteil und ein Sekundärteil auf, welches frei von Mitteln zu Erzeugung magnetischer Felder ist. Vorteilhafterweise ist das Sekundärteil als gezahntes Eisenreaktionsteil mit mehreren Zähnen und Nuten ausgebildet. Das Sekundärteil ist vorteilhafterweise geblecht, d.h. mittels einer Vielzahl an einzelnen Elektroblechen, ausgebildet, um Wirbelstromverluste zu vermeiden. Alternativ könnte das Sekundärteil jedoch auch als massive, gezahnte Eisenreaktionsschiene ausgebildet sein. Die lineare elektrische Maschine ist insbesondere als Synchronlinearmotor ausgebildet.

Ein derartiger Aufbau einer elektrischen Maschine hat den Vorteil, dass das Sekundärteil der elektrischen Maschine keine aktiven Mittel zur Erzeugung eines magnetischen Feldes aufweist. Das Sekundärteil weist lediglich Mittel zur Führung magnetischer Felder auf und ist daher einfach und preisgünstig zu fertigen.

Durch die Reduzierung der Rastkraft mittels der Endzahnmodule, welche modifiziertes Permanentmagnetmaterial gegenüber den übrigen Zahnmodulen aufweisen, ergeben sich mehrere Vorteile:
- verbesserte Eigenschaften der elektrischen Maschine, insbesondere eines Linearmotors, im Betrieb, wie beispielsweise besserer Gleichlauf, höhere Nennkraft, höhere Antriebsdynamik und keine "Geisterbewegung" des abgeschalteten Motors durch Rastkraft;
- verbesserte Eigenschaften in einem Antriebssystem (z.B. Siemens Sinamics-Antriebssystem), wie beispielsweise genauere Pollageidentifikation durch reduzierte elektromagnetische Unsymmetrien (Endeffekte) des Linearmotors.

In der nachfolgenden Beschreibung werden weitere Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar. In den Zeichnungen zeigen:
- FIG 1: eine lineare elektrische Maschine gemäß Stand der Technik,
- FIG 2: eine erfindungsgemäße lineare elektrische Maschine in einer ersten Ausgestaltung,
- FIG 3: eine erfindungsgemäße lineare elektrische Maschine in einer zweiten Ausgestaltung,
- FIG 4: eine erfindungsgemäße lineare elektrische Maschine in einer dritten Ausgestaltung,
- FIG 5: eine Darstellung des Rastkraftverlaufs bei verschiedenen linearen elektrischen Maschinen.

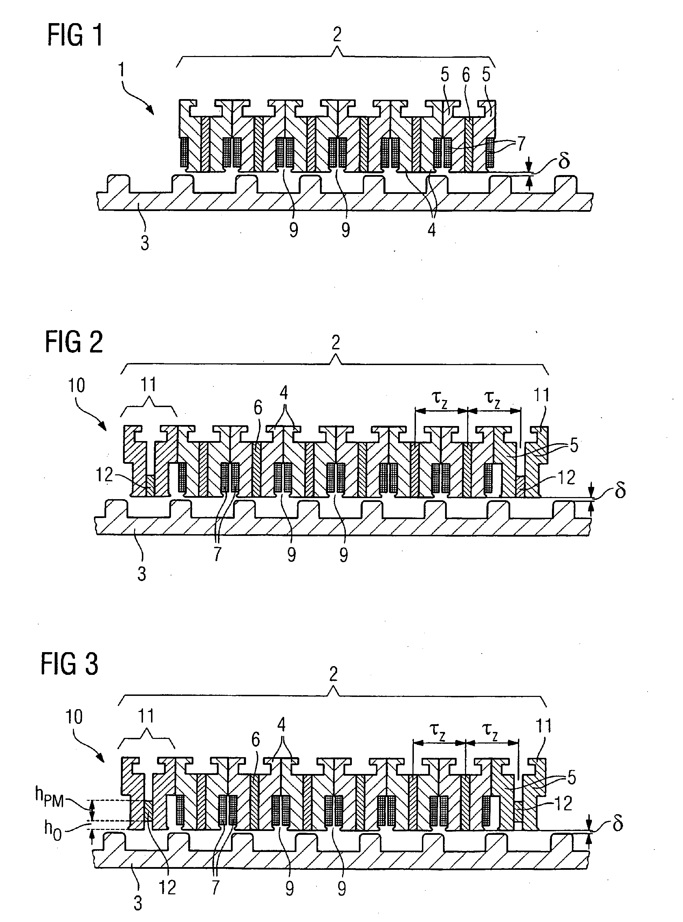

FIG 1 zeigt eine lineare elektrische Maschine 1 gemäß Stand der Technik ohne flussführende Elemente zur Reduktion der Kraftwelligkeit. Die lineare elektrische Maschine 1 umfasst ein Primärteil 2 und ein Sekundärteil 3. Das Primärteil 2 ist mittels Zahnmodulen 4 aufgebaut. Gemäß FIG 1 ist das Primärteil 2 aus sechs Zahnmodulen 4 aufgebaut, wobei jedes Zahnmodul 4 mittels eines Eisen-Blechpakets 5 realisiert ist.

Jedes Zahnmodul 4 weist einen Permanentmagneten 6 auf, welcher in das Zahnmodul 4 integriert ist. Die Permanentmagnete 6 könnten jedoch auch beispielsweise außerhalb des Zahnmoduls 4 am Zahnmodul 4 auf der dem Luftspalt δ zugewandten Seite des Primärteils 2 angeordnet sein. Ein Permanentmagnet 6 weist beispielsweise die Remanenzinduktion B_{R} = 1,2 T auf.

Weiterhin weist jedes Zahnmodul 4 eine Zahnspule 7 auf, wobei die sechs Zahnspulen 7 die Wicklung des Primärteils 2 bilden. Die Wicklung ist dreiphasig mit den Phasen u, v, w ausgebildet, so dass zu jeder Phase u, v, w zwei Zahnspulen 7 ausgebildet sind. Die Zahnspulen 7 liegen in den Nuten 9 des Primärteils 2.

FIG 2 zeigt eine lineare elektrische Maschine 10 in einer ersten erfindungsgemäßen Ausgestaltung. Das Primärteil 2 weist neben den sechs Zahnmodulen 4 die zusätzlichen zwei Endzahnmodule 11 auf, wobei jeweils an einer Stirnseite des Primärteils 2 ein Endzahnmodul 11 angeordnet ist.

Jedes Endzahnmodul 11 weist einen gegenüber den Permanentmagneten 6 modifizierten Permanentmagneten 12 auf, jedoch keine Zahnspule. Alle Permanentmagnete 6 und 12 sind aus dem gleichen Magnetmaterial ausgeführt und weisen beispielsweise eine Remanenzinduktion B_{R} = 1,2 T auf. Jedoch weist der Permanentmagnet 12 gegenüber den Permanentmagneten 6 ein geringeres Volumen auf, d.h. er ist kleiner ausgebildet, um eine optimale Reduzierung der Rastkraft zu erzielen. Für eine konkrete Linearmotorauslegung kann die Motorrastkraft beispielsweise sehr stark reduziert sein (z.B. um den Faktor 5), indem die Höhe des Permanentmagneten 12 auf ca. 40% der normalen Höhe der Permanentmagnete 6 reduziert ist. Die Permanentmagnete 12 sind ebenso bündig an der Unterkante des jeweiligen Endzahnmoduls 11 angeordnet wie die Permanentmagnete 6 in den übrigen Zahnmodulen 4. Alle Permanentmagnete 6 und 12 weisen den gleichen Abstand zum Luftspalt δ auf.

Die Zahnmodule 4 und die Endzahnmodule 11 sind im Übrigen baugleich ausgeführt. Die Endzahnmodule 11 weisen zu den Zahnmodulen 4 die gleiche Nutteilung τ_{Z} wie die Zahnmodule 4 untereinander auf.

FIG 3 zeigt eine lineare elektrische Maschine 10 in einer zweiten erfindungsgemäßen Ausgestaltung. Die elektrische Maschine 10 entspricht im Wesentlichen in ihrem Aufbau der Maschine 10 gemäß FIG 2. Die Permanentmagnete 6 und 12 sind aus dem gleichen Magnetmaterial ausgeführt, jedoch weisen die Permanentmagnete 12 in den Endzahnmodulen 11 ein geringeres Volumen auf, d.h. sie sind kleiner ausgebildet.

Gegenüber der Darstellung gemäß FIG 2 schließen die Permanentmagnete 12 jedoch nicht bündig mit der Unterkante der Endzahnmodule 11 ab, sondern sind versetzt angeordnet. Insbesondere sind die Permanentmagnete 12 in die Endzahnmodule 11 eingezogen. Sie sind nach oben, d.h. weg vom Luftspalt δ, versetzt angeordnet.

Die Permanentmagnete 12 weisen die Höhe h_{PM} auf und sind um die Höhe h₀ versetzt. Insbesondere gilt für h₀: 0 ≤ h₀ ≤ 10δ, wodurch eine Feinjustierung der Kraftwelligkeitsausgleichswirkung erzielt werden kann. Somit können für verschiedene Baugrößen von Linearmotoren oder auch für verschiedene Spurbreiten von Linearmotoren Permanentmagnete 12 mit gleichen geometrischen Abmessungen, insbesondere gleichen Höhe hp_{M}, verwendet werden, und durch eine jeweilige Anpassung der Höhe h₀ die Kraftwellig keitsausgleichswirkung entsprechend angepasst werden.

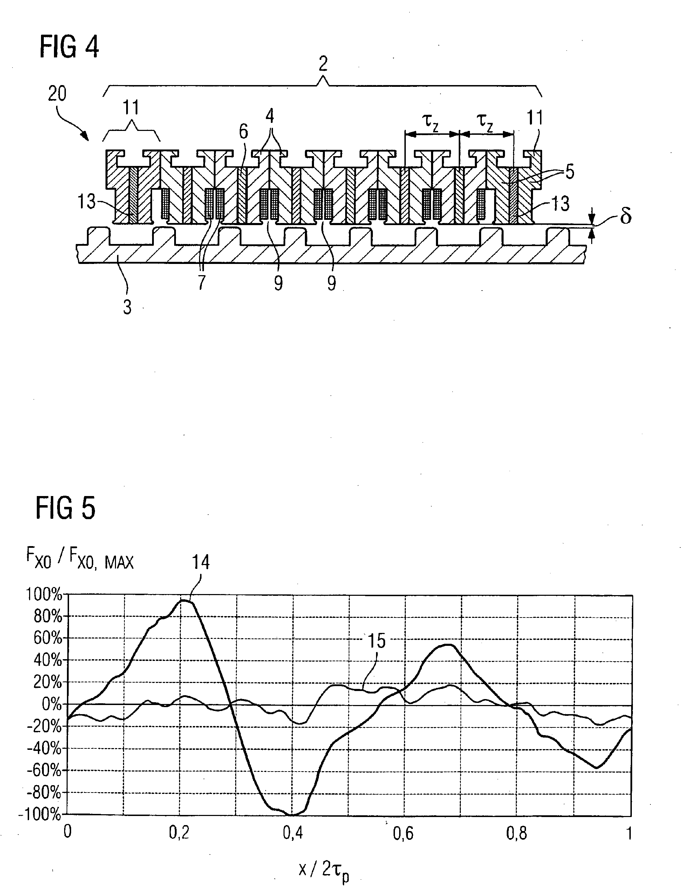

FIG 4 zeigt eine lineare elektrische Maschine 20 in einer dritten erfindungsgemäßen Ausgestaltung. Das Primärteil 2 weist neben den sechs Zahnmodulen 4 die zusätzlichen zwei Endzahnmodule 11 auf, wobei jeweils an einer Stirnseite des Primärteils 2 ein Endzahnmodul 11 angeordnet ist.

Jedes Endzahnmodul 11 weist einen gegenüber den Permanentmagneten 6 modifizierten Permanentmagneten 13 auf, jedoch keine Zahnspule. Die Permanentmagnete 6 und 13 weisen die gleichen geometrischen Abmessungen, jedoch unterschiedliche Magnetisierungen auf. Beispielsweise weisen die Permanentmagnete 6 eine Remanenzinduktion B_{R} = 1,2 T, auf, wohingegen die Permanentmagnete 13 eine Remanenzinduktion B_{R} = 0,3 T, aufweisen. Eine solche auf ca. 25% reduzierte Remanenzinduktion B_{R} ergibt eine um den Faktor 4-5 reduzierte Rastkraft der linearen elektrischen Maschine 20 im Vergleich zur Rastkraft der Maschine 1 gemäß FIG 1 ohne Endzahnmodule.

FIG 5 zeigt eine Darstellung des Rastkraftverlaufs verschiedener elektrischer Maschine. Mit dem Bezugszeichen 14 ist die Amplitude der Rastkraft einer elektrischen Maschine 1 gemäß FIG 1 dargestellt, d.h. einer Maschine ohne flussführende Elemente zur Reduktion der Kraftwelligkeit. Mit dem Bezugszeichen 15 ist dagegen die Amplitude der Rastkraft einer elektrischen Maschine 10 gemäß FIG 2 mit Endzahnmodulen 11 dargestellt. In FIG 5 ist gut zu erkennen, dass nur sehr geringe Rastkräfte auftreten, wenn entsprechende Elemente zur Reduktion der Rastkraft angeordnet sind.

## Patentansprüche

1. Primärteil (2) einer linearen elektrischen Maschine (1, 10,20), wobei das Primärteil (2) aufweist
- ein erstes Mittel zur Erzeugung eines ersten magnetischen Feldes,
- ein zweites Mittel zur Erzeugung eines zweiten magnetischen Feldes,
- wobei erstes Mittel und zweites Mittel derart angeordnet sind, dass eine Überlagerung des ersten magnetischen Feldes mit dem zweiten magnetischen Feld ermöglicht ist,
**dadurch gekennzeichnet, dass** an einer oder beiden Stirnseiten des Primärteils (2) ein flussführendes Element zur Reduktion der Kraftwelligkeit angeordnet ist, wobei das flussführende Element zur Reduktion der Kraftwelligkeit als Endzahnmodul (11) ausgebildet ist und zumindest einen Permanentmagneten (12,13) aufweist, **wobei das Primärteil (2) mittels einer vorgebbaren Anzahl an Zahnmodulen (4) ausbildbar ist, wobei jedes Zahnmodul (4) zumindest einen Permanentmagneten (6) und eine Zahnspule (7) aufweist, wobei das Endzahnmodul (11) in seiner Bauart dabei den übrigen Zahnmodulen entspricht, wobei das Endzahnmodul (11) keine Zahnspule aufweist.**

2. Primärteil (2) nach Anspruch 1, **dadurch gekennzeichnet, dass** das erste Mittel zur Erzeugung eines ersten magnetischen Feldes als ein- oder mehrphasige Wicklung ausgebildet ist.

3. Primärteil (2) nach Anspruch 1 oder 2, **dadurch gekennzeichnet , dass** das zweite Mittel zur Erzeugung eines zweiten magnetischen Feldes als Permanentmagnetmaterial ausgebildet ist.

4. Primärteil (2) nach **einem der vorhergehenden Ansprüche, dadurch gekennzeichnet, dass** die Permanentmagnete (6,12) des Primärteils (2) eine vorgebbare Magnetisierung, insbesondere eine Remanenzinduktion, aufweisen, wobei die Permanentmagnete (6,12) der Zahnmodule (4) und der Endzahnmodule (11) die gleiche Magnetisierung aufweisen.

5. Primärteil (2) nach Anspruch **4**, **dadurch gekennzeichnet, dass** das Endzahnmodul (11) im Vergleich zu einem Zahnmodul (4) einen Permanentmagneten (12) mit geringerem Volumen aufweist.

6. Primärteil (2) nach **einem der Ansprüche 1 bis 3, dadurch gekennzeichnet, dass** die Permanentmagnete (6, 13) des Primärteils (2) eine vorgebbare Magnetisierung, insbesondere eine Remanenzinduktion, aufweisen, wobei die Permanentmagnete (6) der Zahnmodule (4) eine höhere Magnetisierung gegenüber den Permanentmagneten (13) in den Endzahnmodulen (11) aufweisen.

7. Lineare elektrische Maschine (10,20) mit einem Primärteil (2), welches nach einem oder mehreren der Ansprüche 1 bis **6** ausgebildet ist und einem Sekundärteil (3), welches frei von Mitteln zu Erzeugung magnetischer Felder ist.

8. Lineare elektrische Maschine (10,20) nach Anspruch **7**, **dadurch gekennzeichnet, dass** das Sekundärteil (3) eine gezahnte Eisenstruktur mit mehreren Zähnen und Nuten aufweist.

9. Lineare elektrische Maschine (10,20) nach Anspruch **7** oder **8**, **dadurch gekennzeichnet, dass** die Maschine (10,20) als Synchronlinearmotor ausgebildet ist.

## Claims

1. Primary part (2) of a linear electrical machine (1, 10, 20), the primary part (2) having
- a first means for producing a first magnetic field,
- a second means for producing a second magnetic field,
- first means and second means being arranged so as to allow the second magnetic field to be superimposed on the first magnetic field,
**characterised in that** a flux-guiding element is arranged on one or both end faces of the primary part (2) to reduce the force ripple, the flux-guiding element being embodied as an end-tooth module (11) to reduce the force ripple and having at least one permanent magnet (12, 13), it being possible for the primary part (2) to be embodied by means of a predefinable number of tooth modules (4), each tooth module (4) having at least one permanent magnet (6) and one tooth-wound coil (7), the end-tooth module (11) corresponding in its structure to the other tooth modules, the end-tooth module (11) not having a tooth-wound coil.

2. Primary part (2) according to claim 1, **characterised in that** the first means is embodied as a single-phase or polyphase winding to produce a first magnetic field.

3. Primary part (2) according to claim 1 or 2, **characterised in that** the second means is embodied as a permanent magnet material to produce a second magnetic field.

4. Primary part (2) according to one of the preceding claims, **characterised in that** the permanent magnets (6, 12) of the primary part (2) have a predefinable magnetisation, in particular a remanent induction, the permanent magnets (6, 12) of the tooth modules (4) and of the end-tooth modules (11) having the same magnetisation.

5. Primary part (2) according to claim 4, **characterised in that** the end-tooth module (11) has a permanent magnet (12) with a smaller volume compared to a tooth module (4).

6. Primary part (2) according to one of claims 1 to 3, **characterised in that** the permanent magnets (6, 13) of the primary part (2) have a predefinable magnetisation, in particular a remanent induction, the permanent magnets (6) of the tooth modules (4) having a higher magnetisation compared to the permanent magnets (13) in the end-tooth modules (11).

7. Linear electrical machine (10, 20) comprising a primary part (2) which is embodied in accordance with one or more of claims 1 to 6, and a secondary part (3) which is free of means for producing magnetic fields.

8. Linear electrical machine (10, 20) according to claim 7, **characterised in that** the secondary part (3) has a toothed iron structure having a plurality of teeth and slots.

9. Linear electrical machine (10, 20) according to claim 7 or 8, **characterised in that** the machine (10, 20) is embodied as a synchronous linear motor.

## Revendications

1. Partie ( 2 ) primaire d'une machine ( 1, 10, 20 ) électrique linéaire, dans laquelle la partie ( 2 ) primaire a
- un premier moyen de production d'un premier champ magnétique,
- un deuxième moyen de production d'un deuxième champ magnétique,
- dans lequel le premier moyen et le deuxième moyen sont disposés de manière à rendre possible une superposition du premier champ magnétique au deuxième champ magnétique,
**caractérisée en ce que** sur l'un des côtés frontaux ou sur les deux côtés frontaux de la partie ( 2 ) primaire est disposé un élément de conduite de flux pour la réduction de l'ondulation de force, l'élément de conduite de flux pour la réduction de l'ondulation de force étant constitué sous la forme d'un module ( 11 ) à dents d'extrémité et ayant au moins un aimant (12, 13 ) permanent, la partie ( 2 ) primaire pouvant être constituée au moyen d'un nombre pouvant être donné à l'avance de modules ( 4 ) à dents, chaque module ( 4 ) à dents ayant au moins un aimant ( 6 ) permanent et une bobine ( 7 ) à dents, le module ( 11 ) à dents d'extrémité correspondant dans son type de construction aux autres modules à dents, le module ( 11 ) à dents d'extrémité n'ayant pas de bobine à dents.

2. Partie ( 2 ) primaire suivant la revendication 1, **caractérisée en ce que** le premier moyen de production d'un premier champ magnétique est constitué sous la forme d'un enroulement monophasé ou polyphasé.

3. Partie ( 2 ) primaire suivant la revendication 1 ou 2, **caractérisé en ce que** le deuxième moyen de production d'un deuxième champ magnétique est constitué sous la forme d'un matériau formant un aimant permanent.

4. Partie ( 2 ) primaire suivant l'une des revendications précédentes, **caractérisée en ce que** les aimants ( 6, 12 ) permanents de la partie ( 2 ) primaire ont une aimantation pouvant être donnée à l'avance, notamment une induction rémanente, les aimants ( 6, 12 ) permanents des modules ( 4 ) à dents et des modules ( 11 ) à dents d'extrémité ayant la même aimantation.

5. Partie ( 2 ) primaire suivant la revendication 4, **caractérisée en ce que** le module ( 11 ) à dents d'extrémité a, par rapport à un module ( 4 ) à dents, un aimant ( 12 ) permanent d'un volume plus petit.

6. Partie ( 2 ) primaire suivant l'une des revendications 1 à 3, **caractérisée en ce que** les aimants ( 6, 13 ) permanents de la partie ( 2 ) primaire ont une aimantation pouvant être prescrite, notamment une induction rémanente, les aimants ( 6 ) permanents des modules ( 4 ) à dents ayant une aimantation plus grande que les aimants ( 13 ) permanents des modules ( 11 ) à dents d'extrémité.

7. Machine ( 10, 20 ) électrique linéaire ayant une partie ( 2 ) primaire qui est constituée suivant l'une ou plusieurs des revendications 1 à 6, et une partie ( 3 ) secondaire qui n'a pas de moyen de production de champ magnétique.

8. Machine ( 10, 20 ) électrique linéaire suivant la revendication 7, **caractérisée en ce que** la partie ( 3 ) secondaire a une structure de fer dentée, ayant plusieurs dents et encoches.

9. Machine ( 10, 20 ) électrique linéaire suivant la revendication 7 ou 8, **caractérisée en ce que** la machine ( 10 , 20 ) est constituée sous la forme d'un moteur linéaire synchrone.
